# EUROPEAN PATENT SPECIFICATION

(11) **EP 2 313 618 B1**
(45) Date of publication and mention of the grant of the patent: **26.09.2012**
(21) Application number: 08779979.7
(22) Date of filing: 03.07.2008
(51) Int. Cl.: F16H 57/04

(54) **ROLL PIN DIVIDER FOR AXLE LUBRICANT DISTRIBUTION**
WALZENZAPFENTEILER FÜR ACHSENSCHMIERMITTELVERTEILUNG
RÉPARTITEUR À GOUPILLE FENDUE POUR DISTRIBUTION DE LUBRIFIANT SUR ESSIEU

(43) Date of publication of application: 27.04.2011
(73) Proprietor: Deere & Company, Moline, IL 61265 (US)
(72) Inventor: MERRILL, Bradley, Allen, Dike, IA 50624-8066 (US)
(74) Representative: Reichert, Christian
(86) International application number: PCT/US2008/008280
(87) International publication number: WO 2010/002372

(56) References cited:
- JP-A- 4 279 710
- US-A- 2 317 638
- US-A- 2 510 525
- US-A- 4 258 958
- US-A1- 2007 068 735

## Description

The present invention relates to a fluid distribution manifold for lubricating an axle assembly, the distribution manifold comprising: an inlet port; a first flow passage extending from the inlet port to one set of axle components; a second flow passage extending from the inlet port to a second set of axle components, the first and second passages intersecting one another at an angle (δ). The invention further relates to a method of lubricating an axle assembly. 4 A manifold and a method in accordance with the preamble of the independent claims are known from

US 2007/0068735 A.

The friction generated between various components in the axle assembly of industrial machinery, e.g., agricultural, construction, and forestry equipment and tractors, can produce a considerable amount of heat during the operation of the machinery. Typically, a pressurized lubrication system integrated with the transmission system circulates a lubricant, such as oil, between a reservoir and the axle components, thereby, cooling the axle components. Although a conventional lubrication system is capable of cooling an axle component, such performance is obtained at a cost. The external plumbing of lubrication lines to connect with and provide a consistent amount of lubricant to the axle components requires the manufacturing of additional parts along with a considerable amount of time being required to both assemble and maintain these parts. Thus there is a need in the industry to provide a means to reduce both assembly and part costs associated with a lubrication system without sacrificing overall performance.

Accordingly, an object of this invention is to provide a means to reduce both assembly and part costs associated with a lubrication system without sacrificing overall performance.

The object will be achieved by the teaching of claim 1 and 13. Further advantageous embodiments are described within the accompanying claim.

Accordingly, a fluid distribution manifold of above mentioned type is provided, wherein the manifold comprising a roll pin located within the inlet port, the roll pin having portions defining a split extending the length of the roll pin, the split forming an orifice allowing lubricant to flow there through to each of the first and second flow passages, the split being positioned at an angle (ϕ) relative to the first flow passage.

An economical fluid distribution manifold is provided that can deliver a predetermined amount of lubricant to the drive axle components of agricultural, construction, and forestry equipment and tractors. Such a fluid distribution manifold has an inlet port with a roll pin whose orifice allows for a predetermined amount of lubricant to flow, a first flow passage axially extending from the roll pin to one set of axle components, and a second flow passage axially extending from the roll pin to a second set of axle components. The first and second passages are axially aligned making an angle (δ) with each other at their point of intersection; the angle (δ) preferably being about 180 degrees.

In one embodiment of the present invention the roll pin is press fit into the inlet port and its split is positioned to make an angle (ϕ) with the first flow passage and the second flow passage. The angle (ϕ) is preferably about 90 degrees.

In another embodiment of the present invention a flow tube is inserted into the formed first and second flow passages. The roll pin limits the flow tubes from abutting each other and restricting the flow of lubricant to the axle components.

In yet another embodiment of the present invention the manifold also has at least one secondary inlet that combines with the inlet port to provide the predetermined amount of lubricant. This secondary inlet is located along the length of at least one of the flow passages.

Furthermore a method of distributing a predetermined amount of lubricant to the drive axle components is provided. This method has the steps of pumping a lubricant from a reservoir into an inlet port formed in a distribution manifold, allowing the lubricant to flow through a first flow passage and a second flow passage formed with the distribution manifold and axially extending from the inlet port of the manifold to the axle components, and returning the lubricant from the axle components to the reservoir. A secondary inlet may optionally be utilized to supplement the flow of lubricant to the axle components.

Further areas of applicability will become apparent from the description provided herein. It should be understood that the description and specific examples are intended for purposes of illustration only and are not intended to limit the scope of the present disclosure.

The drawings described herein are for illustration purposes only and are not intended to limit the scope of the present disclosure in any way.
Figure 1 is a perspective view of a fluid distribution manifold showing an inlet port, axially extending flow passages, and an optional secondary inlet according to one embodiment of the present invention.
Figure 2 is an orthographic top-down projection of the inlet port in the fluid distribution manifold according to one embodiment of the present invention.

The following description is merely exemplary in nature and is in no way intended to limit the present invention or its application or uses. It should be understood that throughout the description and drawings, corresponding reference numerals indicate like or corresponding parts and features.

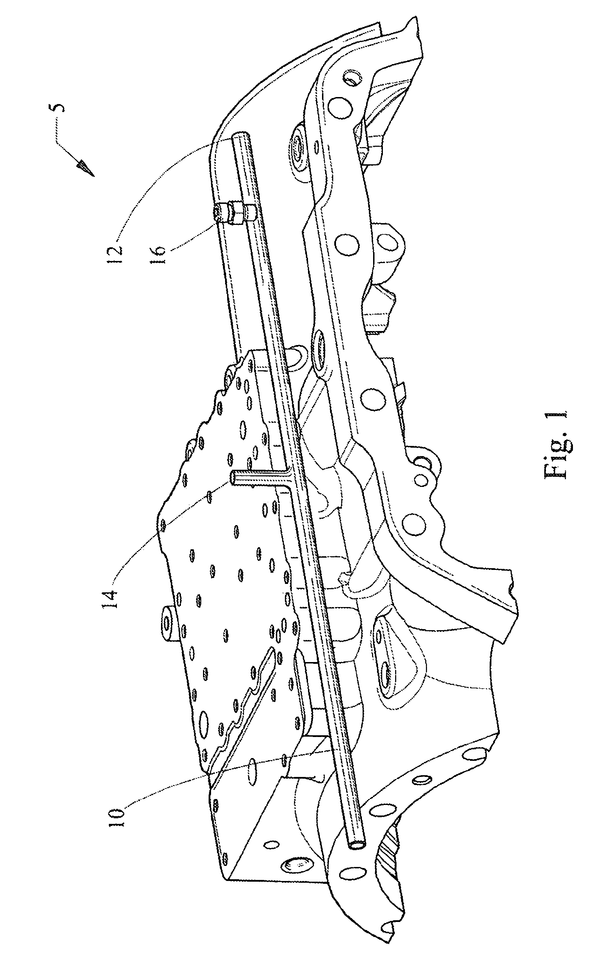

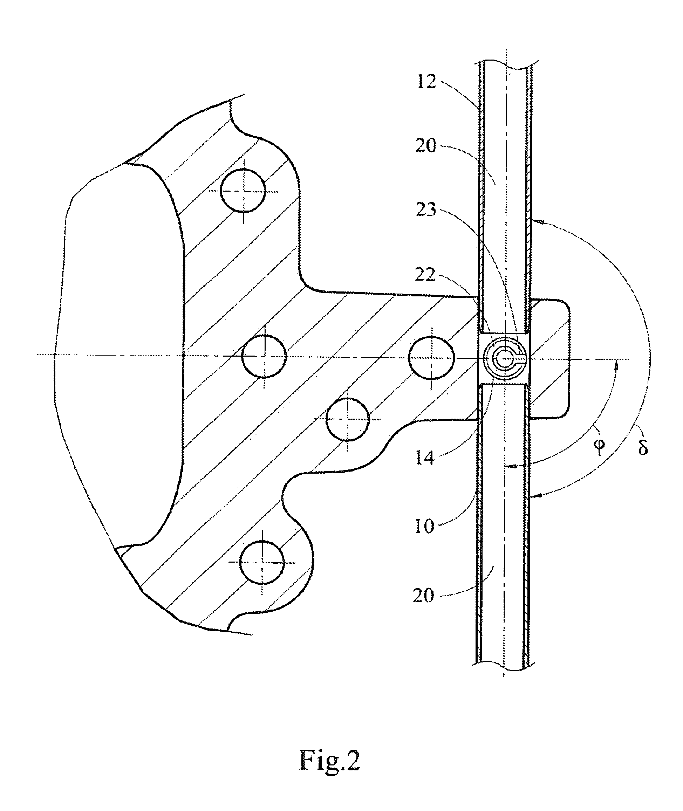

Referring to Figure 1, a portion of a fluid distribution manifold 5 is shown highlighting the presence of an inlet port 14, a first flow passage 10, and a second flow passage 12. Each of the flow passages 10, 12 axially extends from the inlet port 14 in directions generally diametrically opposed to one another, to a set of axle components, including but not limited to bearings, pinions, fittings, and brakes. In other words, the flow passages 10, 12 axially extend away from the inlet port 14 making an angle (δ), which is preferably about 180 degrees, between each other at their point of intersection with the inlet port 14, as shown in Figure 2. The inner diameter of each flow passage 10, 12 is selected in order to prevent one set of axle components from receiving a disproportionate amount of lubricant. Preferably, the inner diameter and the length of the first flow passage 10 and the second flow passage 12 are similar, if not the same. The flow passages 10, 12 may be formed with the fluid distribution manifold 5 or may be defined by tubes or pipes 20 that are inserted into the manifold.

The inlet port 14 represents a passageway that is formed with the fluid distribution manifold and intersects with both the first flow passage 10 and the second flow passage 12, as shown in Figure 1. Referring now to Figure 2, the inlet port 14 of the fluid distribution manifold 5 is fit with a roll pin 22 whose internal orifice diameter is sized to allow the flow of a predetermined amount of lubricant. A roll pin 22, which is also known as a spring pin, is a tube-like pin made from a rolled metal sheet whose split 23 along its length allows the pin to compress and fit into a smaller hole. After being pressed into the passageway of the inlet port 14, the roll pin 22 will exert spring pressure against the port's wall, thereby, becoming securely held or locked in position by frictional forces.

The depth to which the roll pin 22 is inserted into the inlet port 14 is enough to intersect with the flow passages 10, 12. In the case, where tubes 20 define the flow passages 10, 12, the roll pin prevents the tubes 20 in each of the flow passages 10, 12 from abutting one another, which would block or restrict the flow of lubricant to one or both of the axle components.

The leakage of lubricant through the split 23 in the roll pin 22 could allow a disproportionate amount of lubricant to enter one of the flow passages 10, 12 if not appropriately positioned. In order to prevent this from happening, the split 23 in the roll pin 22 is preferably oriented in a specific direction when being driven into the inlet port 14, thus making an angle (ϕ) with the flow passages 10, 12 as shown in Figure 2. The angle (ϕ) is preferably about 90 degrees. However, one skilled in the art will understand that the split in the roll pin 22 may be positioned at an angle other than 90 degrees in order to assist in balancing the flow of lubricant in an otherwise unbalanced distribution manifold 5.

The fluid distribution manifold 5 may have an optional flow restricting element (not shown) positioned near or in contact with the orifice of the inlet port 14. This flow restricting element may encompass any means known to one skilled in the art of limiting the movement of a lubricant including but not limited to, valves, regulators, and inserts having a smaller diameter passageway than the inlet port 14. The flow of lubricant through the flow restricting element may be constant, variably controlled, or adjustable. This element may be used to restrict the flow of lubricant from entering the inlet port when the orifice diameter of the roll pin is to small to accommodate the flow of lubricant present near the entrance of the inlet port 14 or when the distribution of lubricant from the reservoir is needed in locations external to the fluid distribution manifold 5.

The fluid distribution manifold 5 may have at least one optional secondary inlet 16, as shown in Figure 1. This secondary inlet port 16 is utilized when the predetermined amount of lubricant required to be delivered to an axle component is more than the amount that can be supplied through the inlet port 14. This may occur when the diameter of the orifice of the inlet port 14 that is deemed necessary to deliver the predetermined amount of lubricant to an axle component is larger than the width of the largest commercially available roll pin 22. The secondary inlet 16 allows the diameter of the roll pin 22 in the inlet port 14 to be reduced. The fluid delivered by the secondary inlet 16 and the inlet port 14 combine to provide the predetermined amount of lubricant. The secondary inlet 16 may be located on either of the flow passages 10, 12 and more than one secondary inlet may be used.

The lubricant may be any fluid known to one skilled-in-the-art of lubrication. Examples of lubricating fluids include, but are not limited to, multi-grade engine oils, synthetic engine oils, transmission fluid, mineral oils, and polyalphaolefins. The lubricant may also include other performance additives, such as high molecular weight thickeners and viscosity index improvers.

Another objective of this invention is to provide a method for distributing a predetermined amount of lubricant to the drive axle components of agricultural, construction, and forestry equipment and tractors. This method includes the steps of pumping a lubricant from a reservoir into an inlet port 14 formed in a distribution manifold 5; allowing the lubricant to flow through a first flow passage 10 and a second flow passage 12 that are aligned with each other and axially extend from the inlet port 14 of the manifold to the axle components; and returning the lubricant from the axle components to the reservoir. The inlet port 14 of the distribution manifold 5 is fit with a roll pin 22 whose internal orifice diameter is sized to allow for the flow of a predetermined amount of lubricant. The roll pin 22 is oriented relative to the inlet port 14 so as to balance the flow of lubricant to the axle components through the manifold 5. A secondary inlet 16 may optionally be utilized to supplement the flow of lubricant to the axle components if needed or desired. A flow restrictor element (not shown) may optionally be utilized to reduce the flow of lubricant near the entrance of the inlet port 14.

A person skilled in the art will recognize from the previous description that modifications and changes can be made to the present disclosure without departing from the scope of the invention as defined in the following claims.

## Claims

1. A fluid distribution manifold (5) for lubricating an axle assembly, the distribution manifold comprising: an inlet port (14); a first flow passage (10) extending from the inlet port (14) to one set of axle components; a second flow passage (12) extending from the inlet port (14) to a second set of axle components, the first and second passages (10, 12) intersecting one another at an angle (δ); **characterized in that** the manifold (5) further comprises a roll pin (22) located within the inlet port (14), the roll pin having portions defining a split (23) extending the length of the roll pin (22), the split (23) forming an orifice allowing lubricant to flow there through to each of the first and second flow passages (10, 12), the split (23) being positioned at an angle (ϕ) relative to the first flow passage (10).

2. The fluid distribution manifold (5) of claim 1, where the split (23) is positioned at an angle (ϕ) equally between the first and second flow passages (10, 12).

3. The fluid distribution manifold (5) of claim 1 or 2, wherein the angle (δ) between first and second flow passages is about 180 degrees.

4. The fluid distribution manifold (5) of one of the foregoing claims, wherein the angle (ϕ) between the split and the first flow passage is about 90 degrees.

5. The fluid distribution manifold (5) of one of the foregoing claims, wherein the roll pin (22) is in press fit engagement with the inlet port (14).

6. The fluid distribution manifold (5) of one of the foregoing claims, wherein the roll pin (22) extends to a location between the first and second passages (10, 12).

7. The fluid distribution manifold (5) of one of the foregoing claims, wherein a flow tube (20) is located within each of the first and second flow passages (10, 12).

8. The fluid distribution manifold (5) of claim 7, wherein the roll pin (22) defines a limit to which the flow tubes (20) can be positioned toward one another whereby the flow tubes (20) are inhibited from abutting one another.

9. The fluid distribution manifold (5) of one of the foregoing claims, further comprising a flow restricting element near or in contact with entrance orifice of the inlet port (14).

10. The fluid distribution manifold (5) of claim 9, wherein the flow restricting element is one selected from the group of a valve, a regulator, and an insert having a smaller diameter passageway than the inlet port (14).

11. The fluid distribution manifold (5) of one of the foregoing claims, further comprising at least one secondary inlet (16) into one of the first and second flow passages (10, 12).

12. The fluid distribution manifold of Claim 1, wherein the first and second flow passages (10, 12) extend axially from the inlet port (14).

13. A method of lubricating an axle assembly, the method comprising the steps of: pumping a lubricant from a reservoir into an inlet port (14) formed in a distribution manifold (5); allowing the lubricant to flow into a first flow passage (10) and a second flow passage (12) formed with the distribution manifold (5) and extending from the inlet port (14) of the manifold (5) to the axle components; and returning the lubricant from said axle components to the reservoir; **characterized in** metering the distribution of the lubricant between the first and second passages (10, 12) by passing the lubricant through a roll pin (22) located in the inlet port (14), the roll pin (22) having a split (23) extending the length of the roll pin (22) and defining an orifice therein.

14. The method of claim 13, wherein the step of metering the distribution of the lubricant includes positioning the split (23) of the roll pin (22) at an angle (ϕ) relative to the first flow passage (10) such that flow of lubricant is balanced to the first and second flow passages (10, 12).

15. The method of claim 14, wherein the step of metering the distribution of the lubricant includes positioning the split (23) of the roll pin (22) at an angle (ϕ) of about 90 degrees relative to the first flow passage.

16. The method of claim 15, wherein the step of pumping a lubricant into an inlet port (14) further comprises pumping the lubricant through a flow restricting element.

17. The method of claim 16, wherein, the step of pumping lubricant through a flow restricting element includes one selected from the group of maintaining a constant flow of lubricant, variably controlling the flow of lubricant, or adjusting the flow of lubricant through the restricting element.

## Patentansprüche

1. Fluidverteiler (5) zum Schmieren einer Achsanordnung, wobei der Verteiler Folgendes umfasst: einen Einlassstutzen (14); einen ersten Strömungskanal (10), der sich von dem Einlassstutzen (14) zu einem Satz von Achskomponenten erstreckt; einen zweiten Strömungskanal (12), der sich von dem Einlassstutzen (14) zu einem zweiten Satz von Achskomponenten erstreckt, wobei sich der erste und der zweite Kanal (10, 12) in einem Winkel (δ) schneiden; **dadurch gekennzeichnet, dass** der Verteiler (5) weiterhin einen Spannstift (22) umfasst, der in dem Einlassstutzen (14) positioniert ist, wobei der Spannstift Abschnitte aufweist, die einen Spalt (23) definieren, der entlang der Länge des Spannstifts (22) verläuft, wobei der Spalt (23) eine Öffnung bildet, die gestattet, dass Schmiermittel dort hindurch sowohl zu dem ersten als auch zu dem zweiten Strömungskanal (10, 12) fließt, wobei der Spalt (23) in einem Winkel (ϕ) bezüglich des ersten Strömungskanals (10) positioniert ist.

2. Fluidverteiler (5) nach Anspruch 1, wobei der Spalt (23) in einem Winkel (ϕ) gleichmäßig zwischen dem ersten und dem zweiten Strömungskanal (10, 12) positioniert ist.

3. Fluidverteiler (5) nach Anspruch 1 oder 2, wobei der Winkel (δ) zwischen dem ersten und dem zweiten Strömungskanal ca. 180 Grad beträgt.

4. Fluidverteiler (5) nach einem der vorhergehenden Ansprüche, wobei der Winkel (ϕ) zwischen dem Spalt und dem ersten Strömungskanal ca. 90 Grad beträgt.

5. Fluidverteiler (5) nach einem der vorhergehenden Ansprüche, wobei der Spannstift (22) in Presspassungseingriff mit dem Einlassstutzen (14) steht.

6. Fluidverteiler (5) nach einem der vorhergehenden Ansprüche, wobei sich der Spannstift (22) zu einer Stelle zwischen dem ersten und dem zweiten Kanal (10, 12) erstreckt.

7. Fluidverteiler (5) nach einem der vorhergehenden Ansprüche, wobei ein Strömungsrohr (20) sowohl in dem ersten als auch in dem zweiten Strömungskanal (10, 12) positioniert ist.

8. Fluidverteiler (5) nach Anspruch 7, wobei der Spannstift (22) eine Grenze definiert, an der die Strömungsrohre (20) zueinander positioniert werden können, wodurch die Strömungsrohre (20) daran gehindert werden, aneinander anzustoßen.

9. Fluidverteiler (5) nach einem der vorhergehenden Ansprüche, der weiterhin ein Strömungsdrosselelement nahe oder in Kontakt mit der Eingangsöffnung des Einlassstutzens (14) umfasst.

10. Fluidverteiler (5) nach Anspruch 9, wobei das Strömungsdrosselelement ein aus der aus einem Ventil, einem Regler und einem Einsatz mit einem Durchlass, der einen kleineren Durchmesser als der Einlassstutzen (14) aufweist, bestehenden Gruppe ausgewähltes ist.

11. Fluidverteiler (5) nach einem der vorhergehenden Ansprüche, der weiterhin einen Sekundäreinlass (16) in den ersten oder den zweiten Strömungskanal (10, 12) umfasst.

12. Fluidverteiler (5) nach Anspruch 1, wobei sich der erste und der zweite Strömungskanal (10, 12) axial von dem Einlassstutzen (14) erstrecken.

13. Verfahren zum Schmieren einer Achsanordnung, wobei das Verfahren die folgenden Schritte umfasst: Pumpen eines Schmiermittels aus einem Behälter in einen Einlassstutzen (14), der in einem Verteiler (5) ausgebildet ist; Gestatten, dass das Schmiermittel in einen ersten Strömungskanal (10) und einen zweiten Strömungskanal (12), die mit dem Verteiler (5) ausgebildet sind und sich von dem Einlassstutzen (14) des Verteilers (5) zu den Achskomponenten erstrecken, fließt; und Zurückführen des Schmiermittels von den Achskomponenten zu dem Behälter; **gekennzeichnet durch** Dosieren der Verteilung des Schmiermittels zwischen dem ersten und dem zweiten Kanal (10, 12) durch Leiten des Schmiermittels **durch** einen im Einlassstutzen (14) positionierten Spannstift (22), wobei der Spannstift (22) einen Spalt (23) aufweist, der sich entlang der Länge des Spannstifts (22) erstreckt und eine Öffnung darin definiert.

14. Verfahren nach Anspruch 13, wobei der Schritt des Dosierens der Verteilung des Schmiermittels Positionieren des Spalts (23) des Spannstifts (22) in einem Winkel (ϕ) bezüglich des ersten Strömungskanals (10), so dass Schmiermittelstrom zu dem ersten und dem zweiten Strömungskanal (10, 12) ausgeglichen wird, umfasst.

15. Verfahren nach Anspruch 14, wobei der Schritt des Dosierens der Verteilung des Schmiermittels Positionieren des Spalts (23) des Spannstifts (22) in einem Winkel (ϕ) von ca. 90 Grad bezüglich des ersten Strömungskanals umfasst.

16. Verfahren nach Anspruch 15, wobei der Schritt des Pumpens eines Schmiermittels in einen Einlassstutzen (14) weiterhin Pumpen des Schmiermittels durch ein Strömungsdrosselelement umfasst.

17. Verfahren nach Anspruch 16, wobei der Schritt des Pumpens von Schmiermittel durch ein Strömungsdrosselelement eines aus der aus Aufrechterhalten eines konstanten Schmiermittelstroms, verstellbares Steuern des Schmiermittelstroms oder Einstellen des Schmiermittelstroms durch das Drosselelement bestehenden Gruppe umfasst.

## Revendications

1. Collecteur de distribution de fluide (5) pour lubrifier un ensemble d'essieu, le collecteur de distribution comprenant : un orifice d'entrée (14) ; un premier passage d'écoulement (10) s'étendant depuis l'orifice d'entrée (14) jusqu'à un ensemble de composants d'essieu ; un deuxième passage d'écoulement (12) s'étendant depuis l'orifice d'entrée (14) jusqu'à un deuxième ensemble de composants d'essieu, les premier et deuxième passages (10, 12) se croisant en formant un angle (δ) ; **caractérisé en ce que** le collecteur (5) comprend en outre une goupille fendue (22) située à l'intérieur de l'orifice d'entrée (14), la fente (23) formant un orifice permettant l'écoulement à travers elle de lubrifiant jusqu'à chacun des premier et deuxième passages d'écoulement (10, 12), la fente (23) étant positionnée suivant un angle (ϕ) par rapport au premier passage d'écoulement (10).

2. Collecteur de distribution de fluide (5) selon la revendication 1, dans lequel la fente (23) est positionnée suivant un angle (ϕ) de manière équidistante entre les premier et deuxième passages d'écoulement (10, 12).

3. Collecteur de distribution de fluide (5) selon la revendication 1 ou 2, dans lequel l'angle (δ) entre les premier et deuxième passages d'écoulement est d'environ 180 degrés.

4. Collecteur de distribution de fluide (5) selon l'une quelconque des revendications précédentes, dans lequel l'angle (ϕ) entre la fente et le premier passage d'écoulement est d'environ 90 degrés.

5. Collecteur de distribution de fluide (5) selon l'une quelconque des revendications précédentes, dans lequel la goupille fendue (22) est en engagement par ajustement serré avec l'orifice d'entrée (14).

6. Collecteur de distribution de fluide (5) selon l'une quelconque des revendications précédentes, dans lequel la goupille fendue (22) s'étend jusqu'à un emplacement entre les premier et deuxième passages (10, 12).

7. Collecteur de distribution de fluide (5) selon l'une quelconque des revendications précédentes, dans lequel un tube d'écoulement (20) est situé dans chacun des premier et deuxième passages d'écoulement (10, 12).

8. Collecteur de distribution de fluide (5) selon la revendication 7, dans lequel la goupille fendue (22) définit une limite jusqu'à laquelle les tubes d'écoulement (20) peuvent être positionnés l'un vers l'autre, les tubes d'écoulement (20) ne pouvant pas venir en butée l'un contre l'autre.

9. Collecteur de distribution de fluide (5) selon l'une quelconque des revendications précédentes, comprenant en outre un élément de restriction de l'écoulement à proximité de, ou en contact avec, l'embouchure de l'orifice d'entrée (14).

10. Collecteur de distribution de fluide (5) selon la revendication 9, dans lequel l'élément de restriction de l'écoulement est choisi parmi le groupe consistant en une soupape, un régulateur, et un insert ayant un passage de plus petit diamètre que l'orifice d'entrée (14).

11. Collecteur de distribution de fluide (5) selon l'une quelconque des revendications précédentes, comprenant en outre au moins une entrée secondaire (16) dans l'un des premier et deuxième passages d'écoulement (10, 12).

12. Collecteur de distribution de fluide selon la revendication 1, dans lequel les premier et deuxième passages d'écoulement (10, 12) s'étendent axialement depuis l'orifice d'entrée (14).

13. Procédé de lubrification d'un ensemble d'essieu, le procédé comprenant les étapes suivantes : pomper un lubrifiant à partir d'un réservoir dans un orifice d'entrée (14) formé dans un collecteur de distribution (5) ; permettre au lubrifiant de s'écouler jusque dans un premier passage d'écoulement (10) et un deuxième passage d'écoulement (12) formés dans le collecteur de distribution (5) et s'étendant depuis l'orifice d'entrée (14) du collecteur (5) jusqu'aux composants de l'essieu ; et ramener le lubrifiant depuis lesdits composants d'essieu jusqu'au réservoir ; **caractérisé par** le dosage de la distribution du lubrifiant entre les premier et deuxième passages (10, 12) en faisant passer le lubrifiant à travers une goupille fendue (22) située dans l'orifice d'entrée (14), la goupille fendue (22) ayant une fente (23) s'étendant sur la longueur de la goupille fendue (22) et définissant une ouverture dans celle-ci.

14. Procédé selon la revendication 13, dans lequel l'étape de dosage de la distribution du lubrifiant inclut le positionnement de la fente (23) de la goupille fendue (22) suivant un angle (ϕ) par rapport au premier passage d'écoulement (10) de telle sorte que l'écoulement de lubrifiant soit équilibré entre les premier et deuxième passages d'écoulement (10, 12).

15. Procédé selon la revendication 14, dans lequel l'étape de dosage de la distribution du lubrifiant inclut le positionnement de la fente (23) de la goupille fendue (22) suivant un angle (ϕ) d'environ 90 degrés par rapport au premier passage d'écoulement.

16. Procédé selon la revendication 15, dans lequel l'étape de pompage d'un lubrifiant dans un orifice d'entrée (14) comprend en outre le pompage du lubrifiant à travers un élément de restriction de l'écoulement.

17. Procédé selon la revendication 16, dans lequel l'étape de pompage d'un lubrifiant à travers un élément de restriction de l'écoulement inclut une action parmi le groupe consistant à maintenir un écoulement constant de lubrifiant, réguler de manière variable l'écoulement de lubrifiant, ou ajuster l'écoulement de lubrifiant à travers l'élément de restriction.
